# EUROPEAN PATENT APPLICATION

(11) **EP 1 840 160 A2**
(43) Date of publication of application: **03.10.2007**
(21) Application number: 07006470.4
(22) Date of filing: 29.03.2007
(51) Int. Cl.: C08K 3/22, C08K 7/00

(54) **Nanocomposite materials, their production and articles made therefrom**

(30) Priority: 30.03.2006 GB 0606379; 07.04.2006 GB 0606973
(71) Applicant: Certech Asbl, B-7180 Seneffe (BE)
(72) Inventor: Rachidi, Saïd, 7390 Quaregnon (BE); Damsir, Hicham, 60000 Beauvais (FR)
(74) Representative: Bird, William Edward

(57) **Abstract**

This invention provides a surfactant-free nanocomposite material comprising:
(a) an intercalant polymer,
(b) a layered material, and
(c) an oxide selected from the group consisting of silica, titania, zirconia, and mixtures thereof,

wherein the intercalant polymer (a) represents at least 40% by weight of the nanocomposite material, and wherein the weight ratio (c)/(b) ranges from 0.01 to 10.

This nanocomposite material is useful for making moulded, cast or extruded articles having improved mechanical and thermal properties.

## Description

### FIELD OF THE INVENTION

This invention relates to surfactant-free nanocomposite materials having improved physical properties such as flexural modulus and heat distortion temperature. The present invention more specifically relates to intercalated layered materials, and exfoliates thereof, manufactured by sorption (adsorption and/or absorption) of one or more oligomers or polymers between planar layers of a swellable layered material, such as a phyllosilicate, to expand the interlayer spacing of adjacent layers to at least about 0.5 nm.

This invention also relates to the preparation of such surfactant-free nanocomposite materials, as well as higher quality molded, casted or extruded articles such as sheets, panels, films and laminates made from such nanocomposite materials.

### BACKGROUND OF THE INVENTION

It is well known that phyllosilicates, such as smectite clays, e.g. sodium or calcium montmorillonite, can be treated with organic molecules, such as organic ammonium ions, to intercalate the organic molecules between adjacent, planar silicate layers, thereby substantially increasing the interlayer (interlaminar) spacing between the adjacent silicate layers. The thus-treated, intercalated phyllosilicates then can be exfoliated, e.g. the silicate layers are separated e.g. mechanically by high shear mixing. The individual silicate layers, when admixed with a matrix polymer, before, after or during polymerization thereof, have been found to substantially improve one or more properties of the polymer, such as mechanical strength and/or high temperature characteristics.

For instance U.S. Patent No. 5,747,560 discloses a composite material comprising:
a) a polymer matrix comprising a melt processible polymer having a melt processing temperature of at least 220°C, and
b) dispersed platelet particles having an average thickness less than 5 nm and a maximum thickness of 10 nm, and having an onium chemical species bonded thereto such an ammonium compound, said platelet particles being present in an amount of 0.001 to 60% by weight of the composite material.
Such ammonium cations are well known to convert platelet particles of a highly hydrophilic clay, such as sodium or calcium montmorillonite, into an organophilic clay capable of sorbing organic polymer molecules.

However not all polymers can be modified according to the above teaching. For instance, previous attempts have been made to intercalate polyvinylpyrrolidone (PVP) or poly(ethylene oxide) (PEO) between montmorillonite clay platelets with very little success.

The physical properties of such nanocomposites, for example their flexural strength, oxygen/water vapour barrier properties, and/or fire retardency generally depend upon the amount of inorganic filler present in the compositions, and the degree of dispersion of the inorganic filler in the polymer. Furthermore, many platelet particles used to prepare nanocomposites are naturally occurring materials in the form of aggregates of lamellae, such as is the case with montmorillonite, and the degree of delamination, or exfoliation of these platelet particles significantly affects the physical properties of the resulting nanocomposites. In general, higher degrees of exfoliation lead to higher flexural strength and/or higher oxygen/water vapour barrier and/or fire retardency properties for the nanocomposites, and so exfoliation is in general an important step in the production of nanocomposites. In order to improve exfoliation of clays it has been proposed to treat them with quaternary ammonium based surfactants.

However, quaternary ammonium surfactants tend to be thermally unstable at the relatively high temperatures used to process most polymer matrices suitable for intercalation. It has indeed been reported that most quaternary ammonium surfactants degrade at temperatures as low as 200°C. Furthermore such surfactants should preferably be avoided for any food contact use of the resulting nanocomposites. This problem can in principle be solved by treating clays with other classes of surfactants, for example those containing phosphonium ions or imidazole derivatives. However, these alternative surfactants tend to be significantly more expensive and therefore add excessively to the cost of the resulting nanocomposites.

On another hand, the use of more stable low molecular weight surfactants has the disadvantage that any such surfactant which remains in the nanocomposite after processing could tend to migrate towards the surface of the nanocomposite, and this could be a serious health issue if the latter are to be used for making medical devices or food packaging articles.

Thus there is a strong need in the art for making nanocomposites which are free of the disadvantages due to thermally unstable or easily migrating or expensive surfactants thus far required for binding to dispersed platelet particles.

### DEFINITIONS

As used herein, and unless specified otherwise, the term " layered material " means an inorganic material, such as a clay mineral, in the form of a plurality of adjacent, bound layers, wherein each layer has a thickness of about 0.3 nm to about 20 nm.

As used herein, and unless specified otherwise, the term " platelet " means an individual layer of the layered material (the latter being as defined hereinabove).

As used herein, and unless specified otherwise, the term " intercalate " means a layered material (the latter being as defined hereinabove) that includes oligomer and/or polymer molecules disposed between adjacent platelets of the layered material and that are able to increase the interlayer spacing between the adjacent platelets to at least about 0.5 nm. " intercalation " means a process for forming an intercalate.

As used herein, and unless specified otherwise, the term " intercalant polymer "means an oligomer or polymer that is sorbed between platelets of the layered material (the latter being as defined hereinabove) and that complexes with the platelet surfaces to form an intercalate.

As used herein, and unless specified otherwise, the term " intercalating carrier " means a liquid medium comprising water optionally together with an organic solvent, that is used together with an intercalant polymer to form an intercalating composition capable of achieving intercalation of the layered material.

As used herein, and unless specified otherwise, the term " intercalating composition " means a composition comprising an intercalant polymer, an intercalating carrier for the intercalant polymer, and a layered material.
As used herein, and unless specified otherwise, the term " exfoliate " means individual platelets of an intercalated layered material so that adjacent platelets of the intercalated layered material can be dispersed individually throughout a matrix polymer; or throughout an intercalating carrier.

As used herein, and unless specified otherwise, the term " exfoliation " means a process for forming an exfoliate from an intercalate.

As used herein, and unless specified otherwise, the term " nanocomposite" means an oligomer or polymer having dispersed therein a plurality of individual platelets obtained from an exfoliated, intercalated layered material.

As used herein, and unless specified otherwise, the term " matrix polymer" means a thermoplastic oligomer or polymer in which the intercalate and/or exfoliate is dispersed to form a nanocomposite.

### SUMMARY OF THE INVENTION

According to a first aspect, the present invention is based on the unexpected finding that the above problems are solved by a nanocomposite material, in particular an essentially surfactant-free nanocomposite material comprising:
(a) an intercalant polymer,
(b) a layered material, and
(c) a silicon and/or metal oxide,
wherein the intercalant polymer (a) represents at least 40% by weight of the nanocomposite material, and wherein the weight ratio (c)/(b) ranges from 0.01 to 10.

According to a second aspect, the present invention relates to a process for producing the said nanocomposite material in a standard and relatively inexpensive equipment from any type of preferably thermoplastic polymer (a) by combining therewith a layered material preferably having a high aspect ratio (b) and a suspension of nanosize, preferably spherical, silicon and/or metal oxide particles (c) such as, but not exclusively, colloidal silica, in an aqueous and/or organic solvent.

According to yet another aspect, the present invention relates to molded, casted and extruded articles comprising a nanocomposite material, in particular an essentially surfactant-free nanocomposite material such as defined hereinabove.

### DETAILED DESCRIPTION OF THE INVENTION

According to one embodiment, the present invention relates to a nanocomposite material, in particular a surfactant-free nanocomposite material comprising:
(a) an intercalant polymer, preferably a thermoplastic intercalant polymer,
(b) a layered material having an aspect ratio above 6, and
(c) a silicon and/or metal oxide, being preferably selected from the group consisting of silica, titania, zirconia, and mixtures thereof, in the form of particles having an aspect ratio below 1.8 and/or an average size ranging from 1 to 200 nm,
wherein the intercalant polymer (a) represents at least 40% by weight and at most 99.9% by weight of the nanocomposite material, and wherein the weight ratio (c)/(b) ranges from 0.01 to 10.

Each of the required components of the nanocomposite material, in particular the essentially surfactant-free nanocomposite material of this invention, is now described in more extensive details.

A first required ingredient of the material of this invention is a layered material as broadly defined hereinabove, i.e. wherein layers have a thickness in the nanometer range. Another important feature of the layered material used as the component (b) of the nanocomposite, in particular the surfactant-free nanocomposite of this invention, is a high aspect ratio, which means that the layered material (b) has two dimensions which differ substantially from each other, i.e. by about an order of magnitude. Thus they have one dimension (thickness) which is substantially smaller than at least one of their other two dimensions, certainly substantially smaller than their highest dimension (length), giving them a plate-like appearance, or a fibrous appearance. According to one embodiment of this invention the aspect ratio of the layered material (b) is preferably at least about 10, more preferably at least 20. According to another embodiment of this invention the aspect ratio of the layered material (b) is preferably at most about 200, more preferably at most about 100. Suitable examples of the layered material (b) thus also include, but are not limited to, carbon nanotubes and cellulosic fibers.

Plate-like materials suitable for use in the present invention often occur naturally as layered inorganic materials in which individual plates adhere weakly to each other. Typical dimensions of such commercially available layered materials are a thickness ranging from about 0.6 to 20 nm, and a length ranging from about 2 nm to about 1 micron. Non-limiting examples of layered inorganic materials (b) which can be used to produce nanocomposites in accordance with the present invention belong to the inorganic fraction of soils, especially the very fine fraction referred to as clay. Despite the variability in composition, this fraction mainly consists of silicates and oxides. Six types of silicates are recognised on the basis of structural arrangement, as described by Kim H. Tan in Principles of soil chemistry (1998), 3rd edition (Dekker AG), however most of the clays with colloidal properties (the colloidal state of matter being defined as very fine particles with a size between about 5 and 200 nm) are phyllosilicates, or layer-lattice silicates. Major sub-types of available phyllosilicates include smectite, vermiculite, kaolinite, pyrophyllite, illite, chlorite, and micas. Non-limiting examples of phyllosilicates within the sub-type of smectite include montmorillonite, nontronite, beidellite, volkonskoite, hectorite, bentonite, stevensite, pyroysite, saponite, sauconite, magadite and kenyaite. Non-limiting examples of phyllosilicates within the sub-type of kaolinite include halloysite, chrysotile, lizardite and antigorite. A non-limiting example of phyllosilicates within the sub-type of illite is ledikite. Non-limiting examples of phyllosilicates within the sub-type of micas include muscovite, paragonite, biotite, phlogopite, margarite and clintonite. As is known in the art, the above-listed clay minerals differ in their spatial arrangement of atoms (unit cell), crystallinity, and crystal arrangement (lattice structure). On the basis of the number of sheets in one layer, the 1:1 (dimorphic), 2:1 (trimorphic) and 2:2 (tetramorphic) types are recognised in the art. For instance, kaolinites are hydrated aluminosilicates of the 1:1 (dimorphic) type; smectites are hydrated aluminosilicates of the 2:1 (trimorphic) type; illites are micaceous types of clay of the 2:1 (trimorphic) type. Chlorites are hydrated magnesium and aluminum silicates of the 2:2 (tetramorphic) type. Other suitable examples of useful fibrous materials for use as ingredient (b) include non-crystalline clays such as allophane, paracrystalline clays such as imogolite (a hair-like soil constituent from volcanic origin). Depending upon the local geological availability, all these types are in principle suitable as ingredients (b) for the nanocomposites, in particular the essentially surfactant-free nanocomposite material of the invention, including their mixtures in any proportions, although the final physical properties of the resulting nanocomposite may significantly differ when one layered material is substituted with another.

In addition to the required layered material (b) as defined above, other fibrous organic ingredients may optionally be present in the nanocomposite , in particular surfactant-free nanocomposite material of this invention. Examples of such optional fibrous organic materials are carbon nanotubes and cellulose nanofibers.

A second required ingredient of the nanocomposite material , in particular the essentially surfactant-free nanocomposite material of this invention is a silicon and/or metal oxide material (c) in the form of nanosize particles having a low aspect ratio. The exact shape of such particles is not a critical parameter of this invention, as long as their aspect ratio is low, e.g. below about 1.8, i.e. their dimensions do not substantially differ from each other. Preferably the aspect ratio of the silicon and/or metal oxide material (c) is below about 1.5, more preferably below about 1.2. For reason of easiness of manufacture, spherical or nearly-spherical particles are of special interest, although cubic particles or slightly oblong particles are also suitable. Thus, although the size of the particles (c) may be similar to one dimension of the layered material (b), and although the chemical constitution of the particles (c) may be similar to that of the layered material (b), they are clearly different in terms of geometrical appearance (aspect ratio). Spherical particles normally withstand standard processing conditions for making nanocomposites according to this invention. The particle size of the silicon and/or metal oxide material (c) may range from 1 to 200 nm, preferably from 3 to 50 nm. According to one embodiment of the invention, the silicon and/or metal oxide material (c) may include one or more populations of nearly monodisperse particles (i.e. populations each having a size polydispersity not above about 2.0, more preferably not above 1.5), or it may include a population of particles having a significant polydispersity (i.e. a population having a size polydispersity above 2 and up to about 100, for instance from about 3 to about 25. The oxide present in particles (c) may be silicon oxide (silica), titanium dioxide (titania), aluminium oxide (alumina), vanadium oxide, zirconium oxide (zirconia), or a mixture thereof in any proportions, preferably the oxide (c) is selected from the group consisting of silica, titania, zirconia, and mixtures thereof. Any combination of the above features may be envisaged such as, but not limited to, a nearly monodisperse population of silicon oxide particles admixed with a polydisperse population of a metal oxide such as titania or zirconia. Suitable silicon or metal oxide particles (c) for performing the present invention are commercially available from various sources or can be manufactured from bigger coarse particles by using knowledge standard in the art. According to one embodiment of the invention, oxide particles (c) include or consist of colloidal silica (the term " colloidal " being as defined herein-above). Depending upon the commercial source, colloidal silica may, in addition to silicon dioxide, include trace amounts of metal oxides such as, but not limited to, sodium oxide. The presence of such trace amounts should not be understood as departing from the definition of oxide particles (c) in this invention.

The relative proportions (weight ratio) of the layered material (b) and the oxide particles (c) may be selected within a very wide range. This selection may also take into account other technical parameters of the invention such as, but not limited to:
- the proportion of the polymer (a) in the surfactant-free nanocomposite material,
- the chemical composition of the polymer (a),
- the average molecular weight of the polymer (a),
- the type of layered material (b) and the type of oxide(s) in the oxide particles (c),
- the respective sizes of the layered material (b) and the oxide particles (c).

However, in order to bring the expected optimised properties to the nanocomposite, in particular the essentially surfactant-free nanocomposite material of this invention, it is usually preferred that the weight ratio of the silicon and/or metal oxide particles (c) versus the layered material (b) is above about 0.01, more preferably above about 0.05, most preferably above about 0.1. For the same reason, it is also usually preferred that the weight ratio of the silicon and/or metal oxide particles (c) versus the layered material (b) is below about 10, more preferably below about 5, most preferably below about 3. The skilled person may readily determine without undue experimentation the optimal relative proportions of (b) and (c) in view of the above-listed parameters and the desired properties of the final nanocomposite material.

A third required ingredient of the nanocomposite material, in particular the essentially surfactant-free nanocomposite material of this invention is an intercalant polymer species (a) that upon suitable processing with the layered material (b) and the oxide particles (c) builds up the nanocomposite material. Compatible polymer alloys may also be used as intercalant polymer species (a).Useful intercalant polymers (a) include thermoplastic polymers, or mixtures thereof, and vulcanizable and thermoplastic or elastomeric rubbers, with a preference for thermoplastic non-elastomeric intercalant polymers that can readily be extruded or molded. Thermoplastic resins for use in this invention thus include, but are not limited to :
- polylactones such as, but not limited to, poly(pivalolactone), poly(caprolactone) and the like;
- polyurethanes derived from reaction of one or more diisocyanates and one or more linear long-chain diols ; suitable diisocyanates include, but are not limited to, 1,5-naphthalene diisocyanate, p-phenylene diisocyanate, m-phenylene diisocyanate, 2,4-toluene diisocyanate, 4,4-'diphenylmethane diisocyanate, 3,3'-dimethyl-4,4'diphenyl-methane diisocyanate, 3,3-'dimethyl-4,4'-biphenyl diisocyanate, 4,4'-diphenylisopropylidene diisocyanate, 3,3'-dimethyl-4,4'-diphenyl diisocyanate, 3,3'-dimethyl- 4,4'-diphenylmethane diisocyanate, 3,3'-dimethoxy-4,4'-biphenyl diisocyanate, dianisidine diisocyanate, tolidine diisocyanate, hexamethylene diisocyanate, 4,4'-diisocyanatodiphenylmethane and the like ; suitable linear long-chain diols include, but are not limited to, poly(tetramethylene adipate), poly(ethylene adipate), poly(1,4-butylene adipate), poly(ethylene succinate), poly(2,3-butylene succinate), polyether diols and the like;
- polycarbonates such as, but not limited to, poly(methane bis(4-phenyl) carbonate), poly(1,1-ether bis(4-phenyl) carbonate), poly(diphenylmethane bis(4-phenyl)carbonate), poly(1,1-cyclohexane bis(4-phenyl)carbonate) and the like;
- polysulfones such as, but not limited to, polyphenysulfone; polyether-sulfone; polyether-ethersulfone, and the like;
- polyether ether ketones, polyether ketones, and the like;
   polyamides such as, but not limited to, poly (4-amino butyric acid), poly(hexamethylene adipamide), poly(6-aminohexanoic acid), poly(m-xylylene adipamide), poly(p-xylyene sebacamide), poly(2,2,2-trimethyl hexamethylene terephthalamide), poly(metaphenylene isophthalamide) (Nomex), poly(p-phenylene terephthalamide) (also referred as Kevlar®), polyamide-imide, and the like;
- polyesters such as, but not limited to, poly(ethylene azelate), poly(ethylene-1,5-naphthalate, poly(1,4-cyclohexane dimethylene terephthalate), poly(ethylene oxybenzoate), poly(para-hydroxy benzoate) (also referred as Ekonol), poly(1,4-cyclohexylidene dimethylene terephthalate) (also referred as Kodel), polyethylene terephthlate, polyburylene terephthalate and the like;
- poly(arylene oxides) such as, but not limited to, poly(2,6-dimethyl-1,4-phenylene oxide), poly(2,6-diphenyl-1,4-phenylene oxide) and the like;
- poly(arylene sulfides) such as, but not limited to, poly(phenylene sulfide) and the like;
- polyether-imides;
- vinyl polymers and copolymers such as, but not limited to, polyvinyl acetate, polyvinyl alcohol, polyvinyl chloride, polyvinyl butyral, polyvinylidene chloride, ethylene-vinyl acetate copolymers, and the like;
- polyacrylics including polymers and copolymers of (meth)acrylates, (meth)acrylic acid, acrylonitrile and/or (meth)acrylamides, such as, but not limited to, polymethylmethacrylate, polyethyl acrylate, poly(n-butylacrylate), polymethylmethacrylate, polyethyl methacrylate, poly(n-butylmethacrylate), poly(n-propyl methacrylate), polyacrylamide, polyacrylonitrile, polyacrylic acid, ethylene-acrylic acid copolymers, acrylonitrile copolymers, methyl methacrylate-styrene copolymers, ethylene-ethyl acrylate copolymers, methacrylated budadiene-styrene copolymers and the like;
- polyolefins such as, but not limited to, low density polyethylene, polypropylene, chlorinated low density polyethylene, poly(4-methyl-1-pentene), high density polyethylene;
- polyvinylaromatics such as, but not limited to, polystyrene, styrene copolymers and the like;
- ionomers;
- polyurethanes produced from the condensation of diols such as, but not limited to, glycerin, trimethylol-propane, 1,2,6-hexanetriol, sorbitol, pentaerythritol, polyether polyols, polyester polyols and the like with a polyisocyanate such as, but not limited to, 2,4-tolylene diisocyanate, 2,6-tolylene diisocyante, 4,4'-diphenylmethane diisocyanate, 1,6-hexamethylene diisocyanate, 4,4'-dicycohexylmethane diisocyanate and the like;
- imide polymers, e.g. polyethylene imine;
- phenoxy thermoplastic;
- cellulose ester plastics such as, but not limited to, cellulose acetate, cellulose acetate butyrate, cellulose propionate and the like; and
- silicones such as, but not limited to, poly(dimethyl siloxane), poly(dimethyl siloxane), poly(dimethyl siloxane co-phenylmethyl siloxane), and the like.

Vulcanizable and thermoplastic rubbers useful in this invention include, but are not limited to, the following :
- halogenated butyl rubbers ;
- polyurethane elastomers ;
- fluoroelastomers ;
- polyester elastomers,
- butadiene/acrylonitrile elastomers,
- silicone elastomers,
- diene polymers and copolymers such as, but not limited to, polybutadiene, poly(2,3-dimethylbutadiene), poly(butadiene-pentadiene), and the like ;
- olefin and olefin/diene copolymers such as, but not limited to, polyisobutylene, ethylene-propylene copolymers, ethylene-propylene-diene terpolymers, sulfonated ethylene-propylene-diene terpolymers, polychloroprene, chlorosulfonated polyethylene;
- polysulfide elastomers,
- di-block, tri-block, star-shape and comb-shape copolymers, comprising one or more segments of glassy or crystalline blocks such as polystyrene, polyvinyltoluene, poly(tert-butyl styrene), polyester and the like and one or more elastomeric segments such as polybutadiene, polyisoprene, ethylene-propylene copolymers, ethylene-butylene copolymers, polyether ester and the like, such as but not limited to polystyrene-polybutadiene-polystyrene block copolymers (e.g. commercially available as Kraton®).

Preferred thermoplastic intercalant polymers (a) for most end-uses of the resulting nanocomposite materials include polyamides, polyesters, and polymers or copolymers of α,β-ethylenically unsaturated monomers such as detailed herein-after.

Suitable thermoplastic polyamides include, but are not limited to, synthetic linear polycarbonamides, also referred in the art as Nylon, obtained from diamines and dibasic acids. Also, included are copolyamides and terpolyamides obtained for example by condensing hexamethylene diamine with a mixture of terephthalic acid and adipic acid. Polyamides suitable for this invention also include poly(hexamethylene adipamide) (Nylon-6,6), poly(hexamethylene sebacamide) (Nylon-6,10), poly(hexamethylene isophthalamide), poly(hexamethylene terephthalamide), poly(heptamethylene pimelamide) (Nylon-7,7), poly(octa-methylene suberamide) (Nylon-8,8), poly(nonamethylene azelamide) (Nylon-9,9) poly(decamethylene azelamide) (Nylon-10,9), poly(decamethylene sebacamide) (Nylon-10,10), poly(bis(4-amino cyclohexyl)methane-1,10-decane-carboxamide), poly(m-xylene adipamide), poly(p-xylene sebacamide), poly(2,2,2-trimethyl hexamethylene terephthalamide), poly(piperazine sebacamide), poly(p-phenylene terephthalamide), poly(metaphenylene isophthalamide) and the like. Other useful thermoplastic polyamides are those formed by polymerization of amino acids and derivatives thereof, e.g. lactams, such as but not limited to poly(4-aminobutyric acid) (Nylon 4), poly(6-aminohexanoic acid) (Nylon 6), poly(7-aminoheptanoic acid) (Nylon 7), poly(8-aminooctanoic acid) (Nylon 8), poly(9-aminononanoic acid) (Nylon 9), poly(10-amino-decanoic acid) (Nylon 10), poly (11-aminoundecanoic acid) (Nylon 11), poly(12-aminododecanoic acid) (Nylon 12) and the like. Preferred polyamides for this invention have a melt index from about 0.01 to about 10 grams/10 minutes (as measured by ASTM Test No. D-1238 at a load of 1,000 grams at 235°C).

Linear thermoplastic polyesters are also suitable for the practice of this invention. The type of polyester is not critical and depends essentially on the physical properties, i.e., tensile strength, modulus and the like, desired in the final nanocomposite material. The particular polyester chosen can be a homo-polyester or a co-polyester, or mixtures thereof. Such polyesters may be prepared by condensing one or more dicarboxylic acids and one or more diols, e.g. derived from the condensation of aromatic, cycloaliphatic or aliphatic diols with aliphatic, aromatic or cycloaliphatic dicarboxylic acids. Exemplary polyesters include, but are not limited to, poly(ethylene terephthalate), poly(cyclohexylenedimethylene), terephthalate) poly(ethylene dodecate), poly(butylene terephthalate), polyethylene(2,7-napthalate), poly(methaphenylene isophthalate), poly(glycolic acid), poly(ethylene succinate), poly(ethylene adipate), poly(ethylene sebacate), poly(decamethylene azelate), poly(ethylene sebacate), poly(decamethylene adipate), poly(decamethylene sebacate), poly(dimethyl-propiolactone), poly(para-hydroxybenzoate) (referred to as Ekonol), poly(ethylene oxybenzoate), poly(ethylene isophthalate), poly(tetramethylene terephthalate, poly(hexa-methylene terephthalate), poly(decamethylene terephthalate), poly(1,4-cyclohexane dimethylene terephthalate) (trans), poly(ethylene 1,5-naphthalate), poly(ethylene 2,6-naphthalate), and poly(1,4-cyclohexylidene dimethylene terephthalate) (referred to as Kodel). Illustrative aromatic dicarboxylic acids for such polyesters are terephthalic acid, isophthalic acid, o-phthalic acid, 1,3-napthalenedicarboxylic acid, 1,4-napthalenedicarboxylic acid, 2,6-napthalene-dicarboxylic acid, 2,7-napthalenedicarboxylic acid, 4,4'-diphenyldicarboxylic acid, 4,4'-diphenysulfphone-dicarboxylic acid, 1,1,3-trimethyl-5-carboxy-3-(p-carboxy-phenyl)-indane, diphenyl ether 4,4'-dicarboxylic acid, bis-p(carboxy-phenyl) methane and the like. In specific embodiments of this invention, poly(ethylene terephthalate), poly(butylene terephthalate) and poly(1,4-cyclohexane dimethylene terephthalate) are the polyesters of choice.

Other suitable thermoplastic intercalant polymers (a) include, but are not limited to, homopolymers and copolymers of ethylene, propylene, but-1-ene, vinyl alcohol, acrylonitrile, vinylidene chloride, (meth)acrylic acid esters, (meth)acrylic acid amides, (meth)acrylic acid alkaline salts, tetrafluoroethylene, chlorotrifluoroethylene, vinyl chloride and the like. The preferred intercalant homopolymers or copolymers of ethylene have a melt index of from about 0.01 to about 1.0 grams per 10 minutes (as measured according to ASTM Test No. D1238 at a load of 2,160 grams at 190°C). More specific examples of this class include polypropylene, high density polyethylene and propylene-ethylene copolymers having a melt flow index, as measured according to ASTM D1238 at 230°C under 2.16 kg, from about 0.1 to about 200 grams per 10 minutes. Vinyl chloride can be combined with up to about 50 % by moles of one or more other vinyl monomers for making vinyl chloride copolymers which may be linear, branched, graft, random copolymers or block copolymers, the balance being vinyl chloride. Vinyl monomers that can be combined with vinyl chloride to form such vinyl chloride copolymers include, but are not limited to, acrylonitrile, α-olefins such as ethylene, propylene or 1-butene, chlorinated monomers such as vinylidene dichloride, acrylic monomers such as acrylic acid, methyl acrylate, ethyl acrylate, methyl methacrylate, acrylamide or hydroxyethyl acrylate, styrenic monomers such as styrene, α-methyl styrene or vinyl toluene, and vinyl acetate. Most suitable polyvinyl chloride polymers exhibit a number average molecular weight Mₙ from about 50,000 to about 150,000 and/or a K value ranging from about 50 to about 70.

The nanocomposite material, in particular the essentially surfactant-free nanocomposite material of this invention may further include one or more optional additives commonly used in the polymer processing technology.

Such optional additives include, but are not limited to, nucleating agents, foaming agents, plasticizers, impact modifiers, chain extenders, colorants such as organic dyes or inorganic pigments, mold release agents, lubricants, antistatic agents, fire retardants, heat stabilisers, extrusion aids, smoke retardants, inorganic fillers such as calcium carbonate, and the like. The detailed nature of such optional additives, and their appropriate amounts with respect to the intercalant polymer (a), are well known to the skilled person and depend from a number of parameters such as, but not limited to, the function to be performed by the relevant additive, the type of intercalant polymer (a), and the intended use of the molded or extruded article made from the resulting nanocomposite material.

For instance the additive may be an impact modifier based on one or more acrylic monomers, with the purpose of improving the impact strength of the nanocomposite material. Examples thereof include polymers and copolymers of acrylic monomers such as acrylic and methacrylic acid, acrylic and methacrylic alkyl esters, acrylic and methacrylic alkyl amides, and acrylic and methacrylic alkaline salts, in particular polymethylmethacrylate, block copolymers of acrylates and other ethylenically mono-unsaturated or poly-unsaturated monomers such as styrene, butadiene and the like. An impact-modifying amount of such polymers is usually within a range from about 1 % to 15 % by weight of the intercalant polymeric material (a).

Suitable organic dyes include, but are not limited to, phthalocyanines. Suitable inorganic pigments may be selected from the group consisting of metallic compounds, wherein the term "metallic compound "refers to a compound of a metal ion and one or more atoms or groups of atoms, e.g. in the form of ionic bonds and/or ionic complexes. Such metallic compounds may be selected from a very wide range of species, in particular from the group consisting of metal oxides, metal hydroxides, metal sulfides, metal selenides, metal tellurides and combinations thereof, wherein the metal may belong to any of groups 1 to 15 of the Periodic Table. Suitable examples include, but are not limited to, zinc oxide, zinc hydroxide, calcium hydroxide, iron oxide, magnesium oxide, manganese oxide, nickel hydroxide, vanadium oxide, silver vanadium oxide and the like, including various crystallographic forms thereof (for instance, iron oxide may be present either in its spherical red form or in its prismatic yellow form). The metallic compound may also be selected from carbonates, percarbonates, perthiocarbonates, perdicarbonates, per-phosphates, perdiphosphates, pergermanates, rhenates, perrhenates, ruthenates, perruthenates, tantalates, pertantalates, technetates, pertechnetates, sulfates, thiosulfates, thiotellurates, sulfites, sulfonates, persulfates, carbides, hydrides, borates, perborates, borohydrides, borosilicates, borotitanates, borotungstates, perchromates, silicates, aluminates, nitrates, nitrites, perazotates, arsenites, arseniates, perarseniates, bromates, bromites, iodates, periodates, iodites, periodohexatungstates, manganates, permanganates, molybdates, permolybdates, perthio-molybdates, vanadates, perthiovanadates, titanates, pertitanates, zirconates, chromates, ferrates, ferricyanates, ferrioxalates, ferrocyanates, ferro-fulminates, cobaltocyanates, nickelates, nickelotungstates, platinates, uranates, peruranates, perosmiates, chlorates, perchlorates and chlorites of one or more metals of any of groups 1 to 15 of the Periodic Table.

A plasticizer for the intercalant polymer (a) may be important, especially when (a) is a vinyl chloride polymer such as referred herein-above, and may be suitably selected from the group consisting of dialkyl phtalates, e.g. wherein each alkyl group has from 4 to 18 carbon atoms and may be straight or branched, preferably wherein alkyl is n-butyl, isobutyl, n-hexyl, n-octyl, n-decyl and the like. More specific examples of suitable and commercially available plasticizers include dibutylphtalate, dioctylphtalate and mixtures thereof.

One or more additives suitable for improving the wetting and compatibility of the layered material (b) and/or oxide particles (c) with the intercalant polymer (a), can be added during the processing of intermediate master batches or during the processing of the final nanocomposite products in order to further improve the cohesion and/or mechanical properties of the nanocomposite, in particular the substantially surfactant-free nanocomposite of the invention. Although this is not a critical parameter of this particular embodiment of the invention, such compatibility-improving additives are preferably used together with non-polar or poorly polar intercalant thermoplastic polymers (a) such as polyolefins or halogenated polyolefins. Examples of suitable compatibilising agents are well known in the art and include, but are not limited to, maleinised thermoplastic resins (in particular maleinised polypropylene), polyolefin waxes (such as low molecular weight ethylene-maleic anhydride copolymers), styrene-maleic anhydride copolymers (hereinafter referred as SMA), long hydrocarbon chain alkenyl succinates or silanes. Effective amounts of such compatibility-improving additives are well known in the art and can be readily determined by the skilled person, depending upon parameters such as, but not limited to, the type of intercalant polymer (a), the respective proportions of said intercalant polymer (a), the layered material (b) and the oxide particles (c), and the type of equipment in which the resulting nanocomposite material will be processed.

According to a second aspect, the present invention relates to a process for making a nanocomposite material, in particular a substantially surfactant-free nanocomposite material such as above-described, said process comprising the step of combining the relevant proportions (such as above described) of an intercalant polymer, preferably a thermoplastic non-elastomeric intercalant polymer (a), a layered material (b) and a silicon and/or metal oxide (in particular one selected from the group consisting of silica, titania, zirconia, and mixtures thereof) (c), being characterised in that one or more of said layered material (b) and said silicon and/or metal oxide (c) are combined in the form of a suspension in an aqueous and/or organic solvent. Optionally this combination step may further include the combination of one or more additives such as, but not limited to, the compatibilising agents, plasticizers and/or colorants specified herein-above.

According to a specific embodiment of this process of the invention, the concentration of solids in said aqueous and/or organic solvent suspension may range from about 1 % up to about 50% by weight with respect to the intercalant polymer (a). Examples of polar organic solvents which can be used in accordance with the present invention, with or without water, include but are not limited to alcohols (e.g. methanol, ethanol, isopropanol and the like) and ketones (e.g. dibutylketone, methyl-isobutylketone and the like).

The temperature at which the combination or blending of components is effected can be varied according the type of intercalant polymer (a) present in the nanocomposite material. This temperature may be as high as 400°C in the case of polymers such as polytetrafluorethylene, polyether sulfones or polyether-ether ketone. Such elevated temperatures would usually cause significant thermal degradation of the quaternary ammonium surfactants used in the prior art, but advantageously do not cause any harm to the silicon and/or metal oxide particles

### (c) present in the nanocomposite material of this invention.

The present invention surprisingly and advantageously enables nanocomposite materials to be produced with any type of thermoplastic (preferably non-elastomeric) intercalant polymer (a), whether polar or not, whether hydrophilic or not, i.e. without any limitation being imparted to the polymeric component of the nanocomposite material. Suitable dispersions or blends of all required components can be prepared under moderate shear conditions, while using standard manufacturing equipment. According to an embodiment of this invention, the combination step of the process of this invention is achieved by extrusion. For this purpose, a single screw extruder, or preferably a co-rotating double screw extruder, can be used. Suitable screw length/diameter ratios range from about 15 to 60, and no limitation applies to the number of transporting zones along the extruding screw. Extruding conditions such as the extrusion temperature and/or the screw rotation speed are not critical parameters of the process of the invention, and can be determined by the skilled person depending upon the type of intercalant polymer (a). Suitable extrusion temperatures usually range from about 140°C to 280°C, for instance from about 160°C to 220°C.

The present invention offers the significant benefit that non surface-treated, non chemically modified layered materials (b) can be used for making nano-composites, thus significantly reducing the costs of ingredients with respect to the existing materials, and avoiding the use of unstable and/or potentially dangerous surfactants (especially in food contact applications).

The present invention also provides good interfacial adhesion of the components and good stability of the resulting nanocomposite, while simultaneously avoiding the potential migration of additives towards the surface of the nanocomposite material.

In one embodiment of the process of this invention, an unmodified layered material (b) with a high aspect ratio, with or without a certain amount of the polymer matrix material (a), are initially allowed to swell in a solvent suspension of the silicon and/or metal oxide particles (c). The swollen material is then added to a relevant amount of the intercalant polymer material (a), and the mixture is then melt compounded in a melt compounding device, for example a twin screw extruder. In another embodiment of the invention, the high aspect ratio layered material (b) and the suspension of nanosize silicon and/or metal oxide particles (c) are added separately to the polymer (a) in the melt compounding device. Any combination of these two embodiments can be used. For example, a moist or partially solvent-swollen high aspect ratio material (b) can be first mixed with the intercalant polymer material (a), and another (complementary) proportion of the suspension of nanosize silicon and/or metal oxide particles (c) is then injected into the first mixture during melt mixing. Alternatively, the intercalant polymer (a) can be extruded in presence of an aqueous slurry of the high aspect ratio layered material (b) and in the presence of a suspension of nanosize silicon and/or metal oxide particles (c). Still another possibility is to use mixtures of solvent swollen or dry high aspect ratio layered material (b) and dry agglomerated nanosize silicon and/or metal oxide particles (c). Still another possibility is to use an intercalant polymer (a) already containing dispersed nanosize silicon and/or metal oxide particles (c), and to mix it with the high aspect ratio material (b).

In accordance with the present invention, melt blending is suitably carried out in a co-rotating twin-screw extruder having one entrance feeder for receiving the intercalant polymer (a) and the layered material (b) and having one injection port through which a suspension of nanosize silicon and/or metal oxide particles (c) is injected under pressure before melting, or into the molten polymer (a). An atmospheric degassing device allows to vent volatile compounds, particularly water and/or solvent vapours. Further degassing can be advantageously performed by applying vacuum degassing along the extruder screw, if necessary.

Nanocomposite materials produced in accordance with the methods and compositions of the present invention can exhibit normal bulk densities or, when prepared in the presence of a suitable foaming agent, be in the form of low density foams, depending upon the final use intended for the nanocomposite material.

The following examples represent suitable illustrations of the invention, but are by no means meant to be restrictive. In all examples, the following materials and methods were used:
- Melt compounding was effected using a co-rotating extruder (Prism THERMO ELECTRON type 24HC); the screw length was 730 mm and its length to diameter ratio was 28. The co-rotating extruder is equipped with a vent connected to vacuum pump;
- Flexural modulus was measured using traction bench Zwick Z010/THEA equipped with a 10 KN strength sensor. The test speed of measurement was 2 mm/minute and monitoring was performed by using a bi-directional extensometer;
- Thermogravimetric analysis (TGA) were performed on TGA 850 METTLER TOLEDO under an atmosphere of air (100 ml/minute). For polyolefins, temperature was increased from 25°C to 600°C at a rate of 10°C/minute followed by a 5 minutes isotherm period at 600°C. For polyethersulfone (PES), temperature was increased from 25°C to 800°C at a rate of 10°C/minute followed by a 5 minutes isotherm period at 800°C;
- Heat deflection temperature (HDT) was measured according to ISO 75-2 using method A (load of 1.8 Mpa). The sample were placed in a flat-wise position and the temperature was raised by 120°C/hour.
- Transmission electron microscopy (TEM) was performed on a Tecnai 12 (120 kV) microscope equipped with SIS Megaview II camera. In order to get a better constrast at ultra-high magnification a GIF (Gatan Image Filtered) camera was also used.
- Sections were obtained by ultra-microtomy (Leica ultracut UCT). In some cases, the microtome was mounted with a Leica EMFCS cryo-room (depending of the temperature needed for cutting the sample). Sections were cutted on Diamond knife, and putted on 400 Mesh copper grid.

### Example 1 (comparative)

A blend containing 940 g of granulated polypropylene (PP) (commercially available from DOW Plastics as PP XMA6150P), 50 g of a granulated maleinised polypropylene (PP-g-MA) (commercially available from Crompton as Polybond 3200) and 33 g of ammonia-stabilised colloidal silica spheres of 12 nm diameter (Bindzil 30NH3/220 commercially available from Akzo Nobel) were melt compounded through a co-rotating extruder at 220°C and 150 rpm. A second melt compounding of the obtained pellets was performed at 190°C and 400 rpm.

TEM observations show agglomerates at micro-nano scale of nanosphere of colloidal silica, and isolated nanospheres of colloidal silica within the polymer matrix.

### Example 2

75 g of raw, untreated montmorillonite (commercially available under the trade name Cloisite Na+ from Southern Clay; size 1 nm thick, about 100 nm across, i.e. having an average aspect ratio of about 100), was added to a solution containing 40 g of ammonia-stabilised colloidal silica spheres of 12 nm diameter (Bindzil® 30NH3/220 commercially available from Akzo Nobel) and 149 g water, using mechanical agitation. The obtained slurry was then mixed under mechanical agitation with 1335 g of granulated polypropylene (commercially available from DOW Plastics as PP XMA6150P) and 75 g of a granulated maleinised polypropylene (PP-g-MA) (commercially available from Crompton as Polybond 3200). The co-rotating extruder was then fed with the mixture and melt compounding was performed at 220°C and a rotation speed of 150 rpm. A second melt compounding of the pellets thus obtained was performed at 190°C and 400 rpm.

TEM observations show a fine dispersion with mainly intercalated platelets with nanospheres in between plates. Nanospheres of colloidal silica are located mainly in between and around clay platelets. Observations further shows clay plates being pulled away by nanosphere particles.

### Example 3

75 g of raw, untreated montmorillonite (Cloisite Na+ from Southern Clay, same as in example 2), was blended with a solution containing 35 g of sodium-stabilised colloidal silica spheres of 24 nm diameter (Bindzil 305/220 from Akzo Nobel) and 150 g water using mechanical agitation. The obtained slurry was then mixed under mechanical agitation to 1335 g of granulated polypropylene (PP) (DOW Plastics PP XMA6150P) and 75 g of a granulated maleinised polypropylene (PP-g-MA) (Crompton Polybond 3200). The co-rotating extruder was then fed with the mixture and the melt compounding was performed at 220°C and 150 rpm. A second melt compounding of the pellets obtained was performed at 190°C and 400 rpm. TEM observations show the same situation as in example 2 but with exfoliated clay platelets. Nanospheres of colloidal silica are located mainly in between or around clay platelets.

### Example 4

75 g of raw, untreated montmorillonite (Cloisite Na+ from Southern Clay, same as in example 2), was added to a solution containing 100 g of sodium stabilized colloidal silica spheres of 4 nm diameter (Bindzil 15/750 from Akzo Nobel) and 91 g water using mechanical agitation. The obtained slurry was then mixed under mechanical agitation with 1335 g of granulated polypropylene (PP) (DOW Plastics PP XMA6150P) and 75 g of granulated maleinised polypropylene (PP-g-MA) (Crompton Polybond 3200). The co-rotating extruder was then fed with the mixture and the melt compounding was performed at 220°C and 150 rpm. A second melt compounding of the obtained pellets was performed at 190°C and 400 rpm. TEM observations show intercalated platelet structures swelled by nanosphere particles. Nanospheres of colloidal silica are located mainly in between or around clay platelets.

### Example 5

50 g of raw, untreated montmorillonite (Cloisite Na+ from Southern Clay, same as in example 2), was mixed to solution containing 25 g of ammonia stabilized colloidal silica spheres of 24 nm diameter (Ludox AS40 from Grace Davison) and 101 g water using mechanical agitation. The obtained slurry was then mixed under mechanical agitation with 890 g of granulated polypropylene (PP) (DOW Plastics PP XMA6150P) and 50 g of a granulated maleinised polypropylene (PP-g-MA) (Crompton Polybond 3200). The co-rotating extruder was then fed with the mixture and the melt compounding was performed at 220°C and 150 rpm. A second melt compounding of the obtained pellets was performed at 190°C and 400 rpm. TEM observations show the same situation as in example 2 but with exfoliated clay platelets. Nanospheres of colloidal silica are located mainly in between or around clay platelets.

### Example 6

30 g of raw, untreated montmorillonite (Cloisite Na+ from Southern Clay, same as in example 2), was mixed to solution containing 5 g of Bindzil 305/220 (24 nm size) and 87 g water using mechanical agitation. The obtained slurry was then mixed under mechanical agitation with 970 g of granulated ethylene vinyl alcohol (EVOH) (Soarnol H4815B commercially available from Nippon Gosei). The co-rotating extruder was then fed with the mixture and the melt compounding was performed at 210°C and 100 rpm. TEM observations show a greater number of exfoliated plates as well as a more open intercalated platelet structure. Nanospheres of colloidal silica are located mainly in between or around clay platelets.

### Example 7

30 g raw, unpurified montmorillonite (Cloisite Na+ from Southern Clay, same as in example 2), was added to a solution containing 20 g of Bindzil 30NH3/220 (12nm) and 56 g of water using mechanical agitation. The obtained slurry was then mixed under mechanical agitation with 964 g of polyethersulfone (commercially available from Solvay Advanced Polymers as Radel A300). The co-rotating extruder was then fed with the mixture and the melt compounding was performed at 340°C and 150 rpm. A second melt compounding of the obtained obtained was performed at 340°C and 400 rpm. TEM observations show an intercalated platelet structure with nanospheres of colloidal silica in between clay platelets. Nanospheres of colloidal silica are located mainly in between or around clay platelets.

TGA observations show that:
- the temperature corresponding to 50% weight loss is 640°C for this nanocomposite, as compared to 600°C for the neat PES; and
- the temperature corresponding to 80% weight loss is 690°C for this nanocomposite, as compared to 678°C for the neat PES.

### Example 8

30 g of raw, cellulose Alba fibre C-200 (from Mikro-Tecknick Gmbh&Co), was added to a solution containing 20 g of Bindzil 30NH3/220 (12 nm) and 182 g water using mechanical agitation. The obtained slurry was then mixed under mechanical agitation to 934 g of granulated polypropylene (PP) (DOW Plastics PP XMA6150P) and 30 g of a granulated maleinised polypropylene (PP-g-MA) (Crompton Polybond 3200). The co-rotating extruder was then fed with the mixture. Melt compounding was performed at 220°C and 150 rpm.

TEM observations show a fine dispersion with some nanosize cellulose fibres around 200-300 nm long and around 20-30 nm thick.

The following properties (average from 5 different samples) of nanocomposites of examples 1 to 5 are indicated in table 1:
- flexural modulus FM (expressed in MPa),
- temperature T₅₀ corresponding to 50% weight loss,
- temperature T₈₀ corresponding to 80% weight loss, and
- HDT (method A).

**Table 1**

| Example | FM (MPa) | T₅₀ (°C) | T₈₀(°C) | HDT (°C) |
|---|---|---|---|---|
| 1 | 1030 | 381 | 401 | 49.9 |
| 2 | 1250 | 383 | 407 | 53.1 |
| 3 | 1260 | 373 | 400 | 52.3 |
| 4 | 1190 | 380 | 405 | 53.1 |
| 5 | 1270 | 366 | 395 | ND |

| | | | | |
|---|---|---|---|---|
| ND: not determined | | | | |

### Example 9 (comparative)

25 g of an aqueous solution containing 40 % by weight of colloidal silica (Ludox AS40 spheres of 24 nm diameter, commercially available from Aldrich) was mixed with 990 g of a polypropylene homopolymer (commercially available under the trade name HP552N from BASELL Polyolefins) using a mechanical agitation. The co-rotating extruder was then fed with the resulting mixture and a first melt compounding was performed at 180°C and 150 rpm. A second melt compounding of the pellets obtained was performed at 180°C and 300 rpm.

### Example 10

50 g of raw, untreated montmorillonite (Cloisite Na+ from Southern Clay, same as in example 2), was mixed to 250 g of colloidal silica spheres of 24 nm diameter (Ludox AS40 from Aldrich) using a high mechanical agitation. The obtained slurry was then blended, using a mechanical agitation, with 800 g of polypropylene (HP552N from BASELL Polyolefins) and 50 g of a maleinised polypropylene (Crompton Polybond 3200). The co-rotating extruder was then fed with the resulting mixture and a first melt compounding was performed at 180°C and 150 rpm. A second melt compounding of the pellets obtained was performed at 180°C and 300 rpm.

### Example 11

50 g of raw, untreated montmorillonite (Cloisite Na+ from Southern Clay, same as in example 2), was mixed with 500 g of colloidal silica spheres of 24 nm diameter (Ludox AS40 from Aldrich) using a high mechanical agitation. The obtained slurry was then blended, using a mechanical agitation, with 750 g of polypropylene (HP552N from BASELL Polyolefins) and 50 g of a maleinised polypropylene (Crompton Polybond 3200). The co-rotating extruder was then fed with the mixture and a first melt compounding was performed at 180°C and 150 rpm. A second melt compounding of the pellets obtained was performed at 180°C and 300 rpm.

### Example 12

10 g of raw, untreated montmorillonite (Cloisite Na+ from Southern Clay, same as in example 2) was mixed with 250 g of colloidal silica spheres of 24 nm diameter (Ludox AS40 from Aldrich) using a high mechanical agitation. The obtained slurry was then blended, using a mechanical agitation,with 880 g of polypropylene (HP552N from BASELL Polyolefins) and 10 g of a maleinised polypropylene (Crompton Polybond 3200). The co-rotating extruder was then fed with the mixture and a first melt compounding was performed at 180°C and 150 rpm. A second melt compounding of the pellets obtained was performed at 180°C and 300 rpm.

The following properties (average from 4 different samples) of nanocomposites of examples 9 to 12 are indicated in table 2:
- flexural modulus FM (expressed in MPa),
- temperature T₁₀ corresponding to 10% weight loss,
- temperature T₂₀ corresponding to 20% weight loss, and
- temperature T₅₀ corresponding to 50% weight loss.

**Table 2**

| Example | FM (MPa) | T₁₀ (°C) | T₂₀ (°C) | T₅₀ (°C) |
|---|---|---|---|---|
| 9 | 1750 | 291 | 308 | 339 |
| 10 | 2044 | 299 | 332 | 384 |
| 11 | 2573 | 315 | 347 | 384 |
| 12 | 2064 | 296 | 322 | 371 |

## Claims

1. A surfactant-free nanocomposite material comprising:
(a) an intercalant polymer,
(b) a layered material, and
(c) an oxide selected from the group consisting of silica, titania, zirconia, and mixtures thereof,
wherein the intercalant polymer (a) represents at least 40% by weight of the nanocomposite material, and wherein the weight ratio (c)/(b) ranges from 0.01 to 10.

2. A surfactant-free nanocomposite material according to claim 1, wherein the layered material (b) has an aspect ratio above 6.

3. A surfactant-free nanocomposite material according to claim 1 or claim 2, wherein the layered material (b) comprises layers having a thickness from 0.3 to 20 nm and/or a length from 2 to 1,000 nm.

4. A surfactant-free nanocomposite material according to any of claims 1 to 3, wherein the layered material (b) comprises a phyllosilicate.

5. A surfactant-free nanocomposite material according to claim 4, wherein said phyllosilicate is selected from the group consisting of smectite, vermiculite, montmorillonite, nontronite, beidellite, volkonskoite, hectorite, stevensite, pyroysite, saponite, sauconite, magadite, kenyaite and mica.

6. A surfactant-free nanocomposite material according to any of claims 1 to 5, wherein the intercalant polymer (a) is selected from the group consisting of polyolefins, polypropylene, polylactones, polyurethanes, polycarbonates, polysulfones, polyethers, polyesters, polyacrylics, polyamides, poly(arylene oxides), poly(arylene sulfides), polyetherimides, vinyl polymers, halogenated polymers, cellulose esters, silicones, ionomers, polyether sulfones, polyethylene imine, polyether ketone, polyether ether ketone, polyphenylsulfone, polyethersulfone, polyether ether sulfone, polyphthalamide, polyacrylamide, polyamide-imide, substituted poly(1,4-phenylene), phenoxy thermoplastic, acrylonitrile copolymers, styrene polymers and copolymers, butyl rubbers, fluoroelastomers, polybutadiene, polychloroprene, polyisoprene and mixtures thereof.

7. A surfactant-free nanocomposite material according to any of claims 1 to 6, further comprising a compatibilising agent for compatibilising the intercalant polymer (a) with the layered material (b) and/or the oxide (c).

8. A process for making a surfactant-free nanocomposite material according to any of claims 1 to 7, comprising the step of combining said intercalant polymer (a), said layered material (b) and said oxide (c), wherein one or more of said layered material (b) and said oxide (c) are combined in the form of a suspension in an aqueous and/or organic solvent.

9. A process for making a surfactant-free nanocomposite material according to claim 8, wherein said combination step is performed by extrusion.

10. Use of an oxide selected from the group consisting of silica, titania, zirconia, and mixtures thereof, in the form of particles having an average size ranging from 1 to 200 nm for making a surfactant-free nanocomposite material based on an intercalant polymer and a layered material.

11. Use of a surfactant-free nanocomposite material according to any of claims 1 to 7, wherein the intercalant polymer (a) represents from 40% to 99.9% by weight of the nanocomposite material, as a master-batch for blending with a polymer.

12. A moulded, cast or extruded article comprising a surfactant-free nanocomposite material according to any of claims 1 to 7.

13. A moulded, cast or extruded article according to claim 12, in the form of a sheet, a panel, a film or a laminate.
